# EUROPEAN PATENT APPLICATION

(11) **EP 2 363 343 A1**
(43) Date of publication of application: **07.09.2011**
(21) Application number: 10400018.7
(22) Date of filing: 24.02.2010
(51) Int. Cl.: B64C 39/02

(54) **System for control of unmanned aerial vehicles**

(71) Applicant: Eurocopter Deutschland GmbH, 86609 Donauwörth (DE)
(72) Inventor: Lees, Thilo, 86660 Tapfheim (DE); Vogel, Dominik, 86641 Rain am Lech (DE); Regenfelder, Florian, 80799 München (DE); Lorenz, Sandra, 86497 Horgau (DE); Kreitmair-Steck, Wolfgang, 85521 Ottobrunn (DE); Haisch, Stefan, 85521 Ottobrunn (DE)
(74) Representative: Pouillot, Laurent Pierre Paul

(57) **Abstract**

The invention relates to a system (1) for the control of at least one unmanned aerial vehicle (2) from at least one aircraft (3), preferably a helicopter. The system (1) comprises at least one computer system (4), at least one satellite communication system (5) online with a satellite (6) and at least one radio set (7) for bidirectional data transfer between the aircraft (3) and the at least one unmanned aerial vehicle (2).

## Description

The invention relates to a system for the control of unmanned aerial vehicle with the features of claim 1 and the use of such a system according to claim 9.

The use of unmanned aerial vehicles, i. e. drones, has an increasing importance for civil and military missions. Meanwhile, there are equipments for aircrafts allowing the control of drones from the aircraft during flight and subsequent use for a certain lapse of time (e. g.: University "Bundeswehr Munchen, Institut Luft-und Raumfahrttechnik, Fakultät für Flugmechanik und Flugffhrung").

It is one object of the present invention to provide a system for the control of an unmanned aerial vehicle with a close linkage to aircrafts, preferably a helicopter, for use of such an unmanned aerial vehicle. It is a further object of the present invention to link an unmanned aerial vehicle so closely to an aircraft that such an unmanned aerial vehicle becomes part of an overall aircraft system. A still further object of the present invention is the use of such an overall aircraft system.

A solution is provided with a system for the control of unmanned aerial vehicle with the features of claim 1 and the use of such a system with the features of claim 9. Preferred embodiments of the invention are presented in the dependent subclaims.

According to the invention a system for the control of at least one unmanned aerial vehicle from at least one aircraft, preferably a helicopter, comprises at least one computer system in communication with at least one satellite communication system and at least one radio set for bidirectional data transfer with the at least one unmanned aerial vehicle. The inventive system allows transfer of data captured by the at least one unmanned aerial vehicle to the aircraft for use on board and for communication to the ground. The inventive system allows the control of the at least one unmanned aerial vehicle from the aircraft depending on signals from the at least one unmanned aerial vehicle.

According to a preferred embodiment of the invention the unmanned aerial vehicle is provided with an autonomous control with hierarchically staggered security modes. The unmanned aerial vehicle changes autonomously into a hierarchically staggered security mode supposed to avoid first of all any collision with the aircraft in case of any longer lasting interferences and/or interruptions of the communication between the unmanned aerial vehicle and the aircraft. This hierarchically staggered security mode may lead optionally in further levels to autonomous termination of the mission and/or auto-destruction of the unmanned aerial vehicle.

According to a further preferred embodiment of the invention the at least one computer system is linked to at least one work station on board the at least one helicopter for on board control of the at least one unmanned aerial vehicle.

According to a further preferred embodiment of the invention the at least one computer system comprises a data input and a display for access to the system on board the helicopter.

According to a further preferred embodiment of the invention the at least one computer system is linked to supplemental equipment such as EWS and locating systems for supplemental missions.

According to a further preferred embodiment of the invention the information retrieved by the at least one unmanned aerial vehicle is transferred to on board displays for direct access on board the helicopter to visual information from the at least one unmanned aerial vehicle.

According to a further preferred embodiment of the invention means are provided for a crew on board the helicopter to alter mission parameters of the at least one unmanned aerial vehicle.

According to a further preferred embodiment of the invention the means provide coded commands with respect to the mission parameters.

According to a preferred embodiment of the invention the unmanned aerial vehicle is surveying an area and/or protecting an aircraft.

A preferred embodiment of the invention is presented in the attached drawings.
Fig. 1 shows a system for the control of unmanned aerial vehicle according to the invention, and
Fig. 2 shows a flow chart with respect to the operation of the system for the control of unmanned aerial vehicle according to the invention.

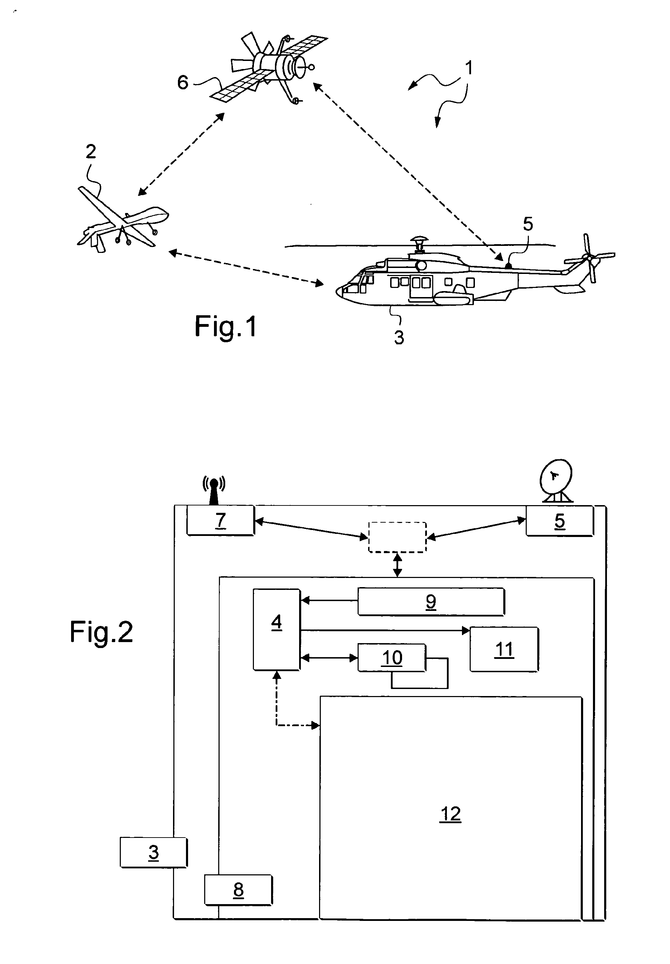

According to Fig. 1, 2, a system 1 for the control of an unmanned aerial vehicle 2, i. e. a drone, from an aircraft 3, such as a helicopter, comprises an on board computer system 4, e. g. a PC and an on board satellite communication system 5 for data exchange via a satellite 6.

The drone 2 registers data and communicates such data to the helicopter 3 via the satellite 6 and the on board satellite communication system 5 fitted to the helicopter 3. The drone's signals are communicated from the satellite communication system 5 to the computer system 4 for further processing. Commands from the helicopter 3 to the drone 2 may be sent via the satellite communication system 5 to satellite 6.

Helicopter 3 is equipped with a plurality of radio sets 7 for data transfer to the at least one unmanned aerial vehicle 2 and vice versa.

The computer system 4 is linked to a work station 8 on board the helicopter 3.

The computer system 4 comprises a data input 9, i. e. keyboard, joystick and/or mouse and a data output via a display 10 and/or a flight display 11. The computer system 4 processes data from a memory 12 related to the control of drone's cargo, control of mission's route, relay function for control of the drone, formation's control/ pathfinding, follow object, surveillance of mission, surveillance of area of mission, localisation, -. The computer system 4 is linked to supplemental equipment such as EWS (not shown) on board the helicopter 3.

The data input 9 is provided to allow from on board the helicopter 3 control of the mission parameters of the unmanned aerial vehicle 2 via encrypted/coded commands.

In the mode of "control of drone's cargo" the specific equipment or the respective supplemental load of the drone 2 may be used on behalf of the controlling aircraft 3 including the option of blowing up the drone 2 via the encrypted/coded commands.

In the mode of "control of the mission's route" the mission's route of the drone 2 may be read from the controlling aircraft 3 and may be corrected, including an automatic mode of "follow me" with predetermined parameters. Consequently the drone 2 may be sent to an area of a common meeting or may be made to survey a landing area of the aircraft 3.

In the mode of "relay function for control of the drone" the guiding aircraft 3 may transfer the control or parts thereof - or exclusively sensor data ― to a relay located elsewhere, e. g. allowing soldiers at the ground to use the drone 2 without far reaching radio sets.

In the mode of "formation's control" the drone 2 is made to fly in a defined distance relative to the controlling aircraft 3 and the drone 2 follows the aircraft 3 while in the special mode of "pathfinding" present flight data from the aircraft 3 is received by the drone 2 and the drone 2 flies with a defined distance ahead of the aircraft 3 in order to reconnoitre the flight path and pass the respective information to the aircraft 3 for on board use.

In the mode of "follow object" a particular object (not shown) is assigned for permanent surveillance by the drone 2. The object may be either fix or mobile. The object is first optically identified with the support of suitable means (not shown) for assessment of pictures on board the drone 2 or on the computer 4 on board the helicopter 3.

In the mode of "surveillance of mission" or "surveillance of area of mission" the drone 2 is supposed to fly above the helicopter 3 in order to survey the mission from its super elevated position. Data gathered up by the drone 2 may be broadcast from on board the helicopter 3 via the satellite communication system 5.

For the mode of "protection" the drone 2 is equipped with fake bodies (not shown) connected to the EWS of the helicopter 3 or updated by means of the sensors of the drone 2. The drone 2 is able to initiate counter measures to divert an oncoming missile (not shown) in order to protect the helicopter 3.

For the mode of "localisation" the drone 2 may be retrieved after having been lost by means of a locating system from the helicopter 3. The drone 2 may as well be used in operations related to the recovery of a missing person providing the advantage of allowing the recovery helicopter 3 to fly within obstructed area but using the extended reach of the sensors of the super elevated drone 2.

Samples of missions for an overall aircraft system using a system for the control of an unmanned aerial vehicle with a close linkage to an aircraft, preferably a helicopter

During a mission for saving human life, being equipped with emergency transmitters and having first of all to be localized it may be necessary and efficient for an aircraft to operate in low altitudes above the ground. Low altitudes above the ground are extremely detrimental for the range of any radio equipment onboard. In such a situation the unmanned aerial vehicle of the overall aircraft system can take over the task to localize from very high above with optimal range of its radio equipment from where the unmanned aerial vehicle can communicate its data to the aircraft low above the ground. After confirmation from the aircraft that the person(s) equipped with the emergency transmitters have been localized the unmanned aerial vehicle is linked again operationally to the aircraft. This may be done either automatically or may be controlled by a mission operator onboard the aircraft.

During a mission of pathfinding the unmanned aerial vehicle of the overall aircraft system has to fulfil the task of manoeuvring in a definitely fixed distance along freely chosen predefined patterns of moves in front of the aircraft prescribed by the operator of the mission towards the point of reception of the persons to be rescued. The unmanned aerial vehicle assumes the task of exploration along the flight path corresponding to its equipment and possibly varying from mission to mission. The detected data are transmitted real time to the aircraft and to other aircrafts and/or ground controls.

The operational linkage of the unmanned aerial vehicle to the aircraft may be effected on different levels. A loose linkage with the unmanned aerial vehicle knowing the position of the aircraft and moving in a defined distance relative to the aircraft towards the target. Consequent to a change of the flight path of the aircraft the unmanned aerial vehicle will accordingly try to maintain the defined distance relative to the aircraft along the flight path towards the target. With a tight linkage of the unmanned aerial vehicle to the aircraft the task of the unmanned aerial vehicle will be to constantly keep the same position relative to the axis of the aircraft. For a change of direction of the aircraft (deviation of x% from the scheduled flight path) the unmanned aerial vehicle would as well fly according to this change of direction in order to maintain its defined position relative to the aircraft. For this purpose the unmanned aerial vehicle receives all the necessary data from the aircraft in realtime. Respective single parameters may be altered by the mission operator during a mission according to the necessities of the mission.

During reception of the persons to be rescued the unmanned aerial vehicle may survey the area of reception from above and communicate these data (sensor information, pictures, TV, ...) to the receiving stations online to trigger off any warnings if applicable. The unmanned aerial vehicle may for this purpose search selectively and autonomously in a predefined space for defined particularities or may as well survey the area for prespecified patterns.

Apart from the task of surveying the unmanned aerial vehicle may as well protect the aircraft. If any thread has been registered the unmanned aerial vehicle may as well initiate deceit and defence actions (corresponding to its equipment level). These defence actions may be to combat aerial or terrestrial targets, deviation of aerial vehicles and/or the use of camouflage.

The unmanned aerial vehicle may move very independently in its single modes and may as well react independently to the moves of the linked aircraft in order to reduce the workload for the mission operator to a minimum. If needed the unmanned aerial vehicle may as well be controlled directly from the mission operator.

Linkage of the aircraft may be effected and deleted during the mission. The unmanned aerial vehicle may as well be handed over between single aircrafts and terrestrial vehicles if necessary.

## Claims

1. A system (1) for the control of at least one unmanned aerial vehicle (2) from at least one aircraft (3), preferably a helicopter, comprising at least one computer system (4), at least one satellite communication system (5) online with a satellite (6) and at least one radio set (7) for bidirectional data transfer between the aircraft (3) and the at least one unmanned aerial vehicle (2).

2. A system (1) according to claim 1,
**characterized in that** the unmanned aerial vehicle is provided with an autonomous control with hierarchically staggered security modes.

3. A system (1) according to claim 1,
**characterized in that** the at least one computer system (4) is linked to at least one work station (8) on board the at least one aircraft (3).

4. A system (1) according to claim 2,
**characterized in that** the at least one computer system (4) comprises a data input (9) and at least one display (10, 11) on board the aircraft (3).

5. A system (1) according to claim 3,
**characterized in that** the information retrieved by the at least one unmanned aerial vehicle is transferred to on board displays (10, 11).

6. A system (1) according to claim 1,
**characterized in that** the at least one computer system (4) is linked to supplemental equipment such as EWS and locating systems.

7. A system (1) according to claim 3,
**characterized in that** means are provided on board the aircraft (3) to alter mission parameters of the at least one unmanned aerial vehicle (2).

8. A system (1) according to claim 6,
**characterized in that** the means provide coded commands with respect to the mission parameters.

9. Use of a system according to any of the preceding claims,
**characterized in that** the unmanned aerial vehicle is surveying an area and/or protecting an aircraft.
